# EUROPEAN PATENT APPLICATION

(11) **EP 2 592 802 A2**
(43) Date of publication of application: **15.05.2013**
(21) Application number: 12161432.5
(22) Date of filing: 27.03.2012
(51) Int. Cl.: H04L 25/02

(54) **Noise reduction in defferential signals**

(30) Priority: 08.11.2011 KR 20110115972
(71) Applicant: Samsung Electronics Co., Ltd., Suwon-si, Gyeonggi-do, 443-742 (KR)
(72) Inventor: Park, Jin-yong, Suwon-si (KR); Ra, Han-ho, Suwon-si (KR)
(74) Representative: Waddington, Richard

(57) **Abstract**

A communication interface apparatus is provided. The communication interface apparatus includes a differential signal generation unit which generates a differential signal on the basis of a ground of a display apparatus; a transformer which amplifies a difference between the generated differential signal and the ground of the display apparatus at a preset ratio on the basis of a ground of an external apparatus; and an output unit which outputs the amplified differential signal.

## Description

### BACKGROUND

### 1. Field

Apparatuses and methods consistent with the exemplary embodiments relate to a communication interface unit and a display apparatus, and more particularly, to a communication interface apparatus and a display apparatus capable of reducing conducted noise of a differential signal induced by ground noise and outputting the differential signal.

### 2. Description of the Related Art

Display apparatuses are apparatuses in which digital or analog image signals received from an outside source and various image signals stored in a compressed file in various formats in an internal storage device therein are processed and displayed. At this time, the digital or analog image signals received from the outside source may be signals transmitted from a broadcasting station, a digital multimedia broadcasting (DMB), various external apparatuses (for example, a set-top box, a disc reproducing apparatus, a mobile apparatus, a personal computer, or the like), or a server by an Internet protocol.

In recent years, the display apparatus has been designed to communicate with other external apparatuses and may perform communication using a differential signaling. Here, the differential signaling is technology to transmit signals in pairs, that is, a first signal and a second signal having an opposite phase to the first signal.

Since the differential signaling is strong compared to a common mode noise, a signal can be accurately transmitted even when ground noise of an apparatus on a first side is severe. However, conducted noise induced by the ground noise may cause a fatal error to an apparatus on a second side. Thus, Federal Communication Commission (FCC) or Conformite Europeenne (CE) has regulated this as a specification.

In the related art, the noise induced by the ground noise is reduced using a damping resistor, a bypass capacitor, a ferrite bead, or the like. However, a differential signal is attenuated by the damping resistor and the ferrite bead. In addition, the ground noise is bypassed to a differential signal by a bypass capacitor method.

### SUMMARY

One or more exemplary embodiments may overcome the above disadvantages and other disadvantages not described above. However, it is understood that one or more exemplary embodiments are not required to overcome the disadvantages described above, and may not overcome any of the problems described above.

One or more exemplary embodiments provide a communication interface apparatus and a display apparatus capable of attenuating conducted noise of a differential noise to be induced by ground noise and outputting the noise-attenuated differential signal.

According to the present invention there is provided an apparatus and method as set forth in the appended claims. Other features of the invention will be apparent from the dependent claims, and the description which follows.

According to an aspect of an exemplary embodiment, there is provided a communication interface apparatus. The display apparatus may include: a differential signal generation unit configured to generate a differential signal on the basis of a ground of a display apparatus; a transformer configured to amplify a difference between the generated differential signal and the ground of the display apparatus at a preset ratio on the basis of a ground of an external apparatus; and an output unit configured to output the amplified differential signal.

The differential signal generation unit may be configured to generate a first positive differential signal and a first negative differential signal on the basis of the ground of the display apparatus.

The transformer may be configured to amplify a difference between the ground of the display apparatus and the first positive differential signal at a preset ratio to generate a second positive differential signal on the basis of the ground of the external apparatus and amplify a difference between the ground of the display apparatus and the first negative differential signal at a preset ratio to generate a second negative differential signal.

The transformer may include a primary winding and a secondary winding, a center of the primary winding may be connected to the ground of the display apparatus and a center of the secondary winding may be connected to the ground of the external apparatus.

The center of the primary winding may be connected to the ground of the display apparatus through a first capacitor and the center of the secondary winding may be connected to the ground of the external apparatus through a second capacitor.

The primary winding may be configured to receive the first positive differential signal through one terminal thereof and the first negative differential signal through the other terminal thereof. The secondary winding may be configured to output the second positive differential signal through one terminal thereof and the second negative differential signal through the other terminal thereof.

A turn ratio of the primary winding to the second primary winding may be 1:1.

The transformer may be a pulse transformer.

The output unit may be compatible with a local area network (LAN) connector.

According to an aspect of an exemplary embodiment, there is provided a display apparatus. The display apparatus may include: a communication interface unit configured to transmit/receive image data to/from an external apparatus using a differential signal; and a display unit configured to display the image data. The communication interface unit may include a differential signal generation unit configured to generate a differential signal on the basis of a ground of a display apparatus; a transformer configured to amplify a difference between the generated differential signal and the ground of the display apparatus on the basis of a ground of an external apparatus; and an output unit configured to output the amplified differential signal.

The differential signal generation unit may be configured to generate a first positive differential signal and a first negative differential signal at a preset ratio on the basis of the ground of the display apparatus.

The transformer may be configured to amplify a difference between the ground of the display apparatus and the first positive differential signal at a preset ratio to generate a second positive differential signal on the basis of the ground of the external apparatus and amplify a difference between the ground of the display apparatus and the first negative differential signal at a preset ratio to generate a second negative differential signal.

The transformer may include a primary winding and a secondary winding, a center of the primary winding may be connected to the ground of the display apparatus and a center of the secondary winding may be connected to the ground of the external apparatus.

Additional aspects and advantages of the exemplary embodiments will be set forth in the detailed description, will be obvious from the detailed description, or may be learned by practicing the exemplary embodiments.

### BRIEF DESCRIPTION OF THE DRAWING FIGURES

The above and/or other aspects will be more apparent by describing in detail exemplary embodiments, with reference to the accompanying drawings, in which:

FIG 1 is a block diagram illustrating a configuration of a display apparatus according to an exemplary embodiment;

FIG 2 is a block diagram illustrating a specific configuration of a communication interface unit according to an exemplary embodiment;

FIG 3 is a block diagram illustrating a circuit of a transformer of FIG 2;

FIGS. 4 and 5 are views illustrating an operation of a communication interface unit according to an exemplary embodiment; and

FIGS. 6 to 9 are views illustrating characteristics of differential signals generated according to an exemplary embodiment.

### DETAILED DESCRIPTION OF THE EXEMPLARY EMBODIMENTS

Hereinafter, exemplary embodiments will be described in more detail with reference to the accompanying drawings.

In the following description, same reference numerals are used for the same elements when they are depicted in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, functions or elements known in the related art are not described in detail since they would obscure the exemplary embodiments with unnecessary detail.

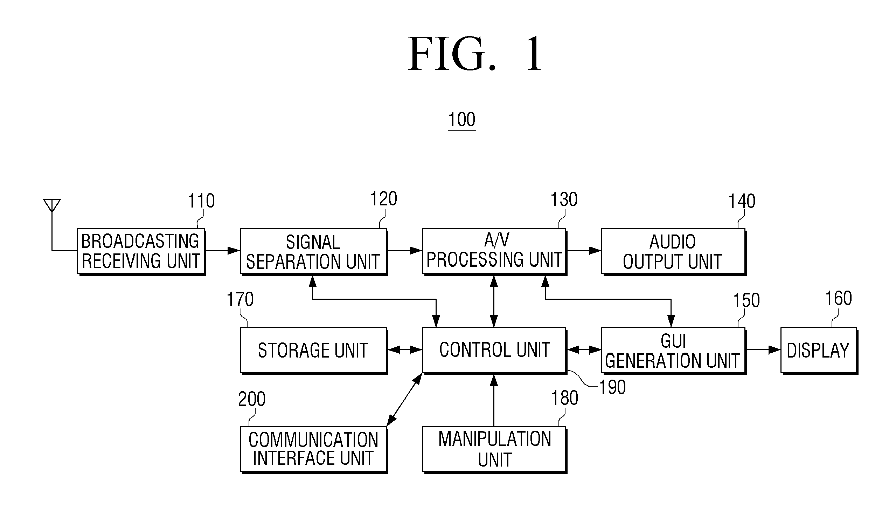

FIG 1 is a block illustrating a configuration of a digital television which is an example of a display apparatus according to an exemplary embodiment.

Referring to FIG 1, the display apparatus 100 according to an exemplary embodiment may include a broadcasting reception unit 110, a signal separation unit 120, an audio/video (A/V) processing unit 130, an audio output unit 140, a graphic user interface (GUI) generation unit 150, a display 160, a storage unit 170, a manipulation unit 180, a control unit 190, and a communication interface unit 200.

The broadcasting reception unit 110 receives a broadcasting signal from a broadcasting station or a satellite in a wired or wireless manner and demodulates the received broadcasting signal.

The signal separation unit 120 separates the broadcasting signal into a video signal, an audio signal, and an additional information signal. The signal separation unit 120 transmits the video signal and the audio signal to the A/V processing unit 130.

The A/V processing unit 130 performs signal processing such as video decoding, video scaling, and audio decoding on the video signal and audio signal input from the signal separation unit 120 and the storage unit 170. The A/V processing unit 130 outputs a video signal to the GUI generation unit 150 and an audio signal to the audio output unit 140.

When the received video signal and audio signal are stored in the storage unit 170, the A/V processing unit 130 may output the video signal and audio signal in a compressed format to the storage unit 170.

The audio output unit 140 converts the audio signal output from the A/V processing unit 130 into a sound and outputs the sound through a speaker (not shown) or outputs the sound to an external apparatus connected through an external output terminal (not shown).

The GUI generation unit 150 generates a GUI to be provided to the user. The GUI generation unit 150 adds the generated GUI to the video signal output from the A/V processing unit 130. The GUI generation unit 150 provides the GUI-added video signal to the display 160.

The display 160 displays the GUI-added image. The display 160 may be implemented with a liquid crystal display (LCD), a light-emitting diode (LED), an active matrix organic LED (AMOLED), a cathode-ray tube (CRT), or the like, but is not limited thereto.

The storage unit 170 may store image content. Specifically, the storage unit 170 may receive and store the image content in which the video signal and audio signal from the A/V processing unit 130 are compressed. The storage unit 170 may output the image content stored therein to the A/V processing unit 130 according to control of the control unit 190. The storage unit 170 may be implemented with a hard disc, a nonvolatile memory, a volatile memory, or the like.

The manipulation unit 180 may be implemented with a touch screen, a touch pad, a key button, a key pad, or the like and provides user manipulation on a broadcasting reception apparatus. The manipulation unit 180 may be included in a display apparatus 100 and receives a user manipulation from an external remote controller.

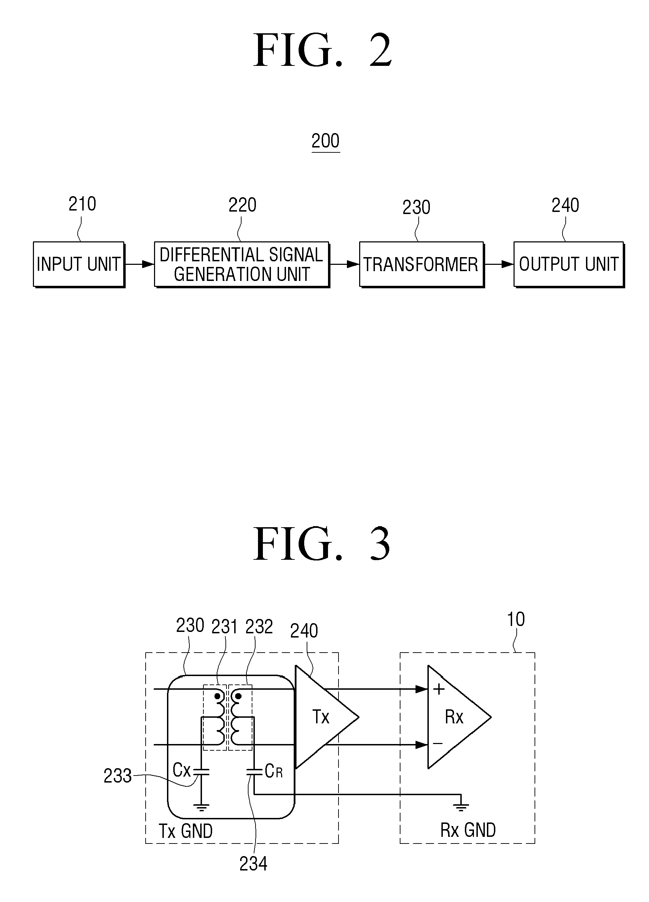

The communication interface unit 200 transmits/receives data to/from an external apparatus using a differential signal. Specifically, the communication interface unit 200 may form a connection of the display apparatus 100 to the external apparatus (not shown) and access to the external apparatus through a LAN and an Internet network. Here, it has been illustrated that the communication interface unit 200 transmits/receives only the image data. However, the communication interface unit 200 may transmit/receive an audio signal, a video signal, image content, a control signal, or the like to/from the external apparatus. A detailed configuration and operation of the communication interface unit 200 will be described with reference to FIG 2 below.

The control unit 190 controls an overall operation of the display apparatus 100. Specifically, when the control unit 190 receives data from the communication interface unit 200, if the received data is image data, the control unit 190 may control the display unit 160 to display the received data. In addition, the control unit 190 may control the communication interface unit 200 to transmit the various types of data stored in the storage unit 170 to an external apparatus.

The above-described display apparatus can remove conducted noise to be induced by ground noise using a transformer without attenuation of the signal.

It has been described that the above-described function is applied to only the display apparatus configured to receive and display the broadcasting signal in FIG 1. However, the communication interface method which will be described later may be applied to any electronic apparatus configured to transmit a differential signal.

FIG 2 is a block diagram illustrating a specific configuration of the communication interface unit of FIG 1.

Referring to FIG 2, the communication interface unit 200 may include an input unit 210, a differential signal generation unit 220, a transformer 230, and an output unit 240.

The input unit 210 receives data to be transmitted. Specifically, the input unit 210 may receive control data including a control command from the control unit 190 or receive a video signal, an audio signal, a control signal, and the like from the storage unit 170.

The differential signal generation unit 220 generates data as a differential signal. Specifically, the differential signal generation unit 220 may generate a first positive differential signal and a first negative differential signal on the basis of a ground of the display apparatus 100 from the data input from the input unit 210.

Here, the first positive differential signal (that is, 1V to 1.4V) is a signal which is changed between a reference voltage level (for example, 1V) and a first voltage (for example, 0.4V) higher than the reference voltage level and the first negative differential signal (that is, 0.6V to 1V) is a signal which is changed between the reference voltage level (for example, 1V) and a second voltage (for example, 0.4V) lower than the reference voltage level. The range of the voltage denotes that a turns ratio of the transformer 230 which will be described later is 1:1. When the turns ratio of the transformer 230 is 1:n, the range of the voltage may be reduced by the ratio according to the turns ratio of the transformer 230.

Since the first positive differential signal and the negative differential signal are voltage signals generated on the basis of the ground of the display apparatus 100, when noise is included in the ground, the first positive differential signal and the first negative differential signal may include the conducted noise induced by ground noise. Thereby, the communication interface unit 200 according to the exemplary embodiment can remove the conducted noise included in the first positive differential signal and the first negative differential signal using the transformer 230 to be described later.

The transformer 230 amplifies a difference between the generated differential signal and the ground of the display apparatus at a preset ratio on the basis of a ground of an external apparatus. Specifically, the transformer 230 may amplify a difference between the ground of the display apparatus and the first positive differential signal at the preset ratio to generate a second positive differential signal on the basis of the ground of the external apparatus and amplify a difference between the ground of the display apparatus and the first negative differential signal at a preset ratio to generate a second negative differential signal. Here, the preset ratio may be 1 or more.

The transformer 230 amplifies the difference between the differential signal and the ground at the preset ratio so that the conducted noise induced in the ground noise can be removed. A secondary winding of the transformer 230 is connected to the ground of the external apparatus having no noise or little noise so that the amplified differential signal is not affected by the ground noise of the display apparatus 100.

The output unit 240 outputs an amplified differential signal. Specifically, the output unit 240 may include a receiving unit configured to be electrically connected to an external apparatus 10 (FIG 3) through a cable connector. The receiving unit may have a shape compatible with a LAN connector. The receiving unit includes a plurality of contact locations configured to be electrically connected to a plurality of contact locations of the LAN cable connector. Thus, the output unit 240 transmits a second positive differential signal output from the transformer 230 through one of the plurality of contact locations, transmits a second negative differential signal through another contact location, and is connected to the ground of the external apparatus 10 through the other contact location.

The communication interface unit 200 according to the exemplary embodiment can remove the conducted noise to be induced by the ground noise using the transformer.

It has been described that the communication interface unit 200 is configured to be included in the display apparatus 100, but the function of the communication interface unit 200 may be implemented with a separate communication interface apparatus.

FIG 3 is a block diagram illustrating a circuit of the transformer of FIG 2.

Referring to FIG 3, the transformer 230 may be implemented with a pulse transformer and include a primary winding 231, a secondary winding 232, a first capacitor 233, and a fourth capacitor 234.

The primary winding 231 receives the first positive differential signal through one terminal thereof and receives the first negative differential signal through the other terminal thereof and a center of the primary winding 231 is connected to the ground of the display apparatus 100 through the first capacitor 233.

The secondary winding 232 outputs the second positive differential signal through one terminal thereof and the second negative differential signal through the other terminal thereof and a center of the secondary winding 232 is connected to the ground of the external apparatus 10 through the second capacitor 234.

One terminal of the first capacitor 233 is connected to the center of the primary winding 231 and the other terminal of the first capacitor 233 is connected to the ground of the display apparatus 100.

One terminal of the second capacitor 234 is connected to the center of the secondary winding 232 and the other terminal of the second capacitor 234 is connected to the ground of the external apparatus 10.

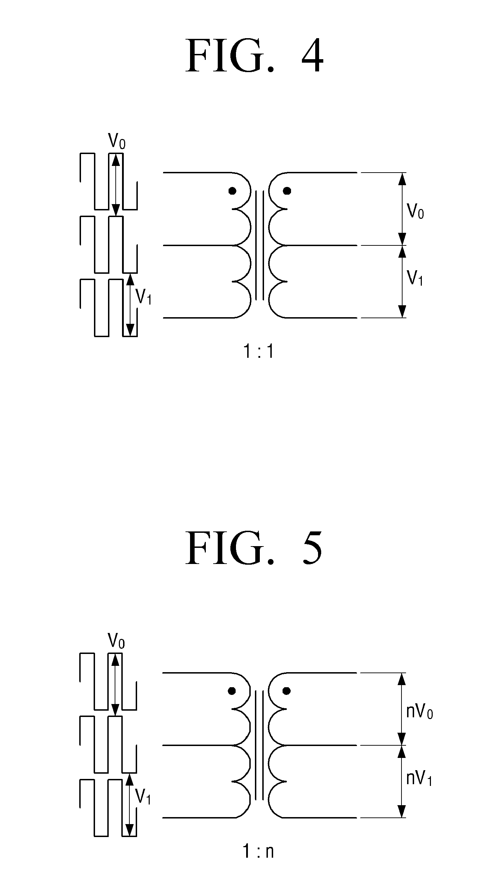

Hereinafter, an operation of the transformer 230 is will be described with reference to FIGS. 4 and 5.

Referring to FIG 4, when ground noise is caused by voltage drop, the ground noise is induced to the first positive differential signal and a first negative differential signal.

The transformer 230 amplifies a difference between a ground V_{Noise} and a first positive differential signal V₀+V_{Noise} at a preset amplifying ratio (1 in the exemplary embodiment) and a difference between a first negative differential signal V₁+V_{Noise} and the ground V_{Noise} at a preset amplifying ratio (1 in the exemplary embodiment) so that the conducted noise is removed from the amplified second positive differential signal (V₀+V_{Noise}-V_{Noise}=V₀) and the amplified second negative differential signal (V₁+V_{Noise}-V_{Noise}=V₁). The center of the secondary winding is connected to the ground of the external apparatus 10 having no ground noise so that the second positive differential signal and the second negative differential signal output from the secondary winding 232 are not affected by the ground noise of the display apparatus 100.

The above-described exemplary embodiment has described that the generated differential signal is amplified at an amplifying ratio of 1, but it may be implemented that the primary winding 231 and the second winding 232 have a different turns ratio. For example, as shown in FIG 5, the primary winding and second winding may be implemented to have a turns ratio of l:n. In this case, the ground noise is removed from the second positive differential signal and the second negative differential signal and n times amplified differential signals nV₀ and nV₁ are generated differently from FIG 4.

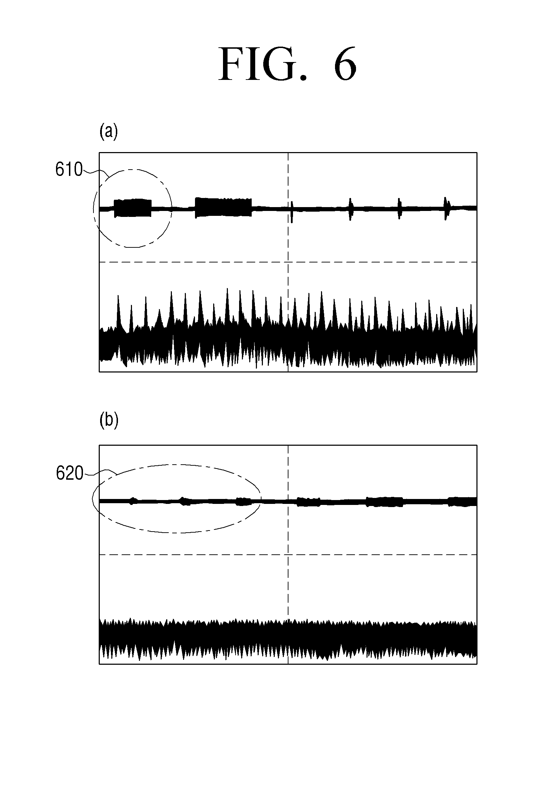

FIGS. 6 to 9 are views illustrating characteristics of generated differential signals according to an exemplary embodiment.

Specifically, FIG 6(a) is a waveform diagram of a differential signal output from a communication interface apparatus in the related art and FIG 6(b) is a waveform diagram of a differential signal output from the communication interface unit according to an exemplary embodiment.

Referring to FIG 6(a), it can be seen that the differential signal in the related art includes the conducted noise induced by the ground noise. However, referring to FIG 6(b), it can be seen that the conducted noise is not included in the differential signal output from the communication interface unit 200 according to the exemplary embodiment.

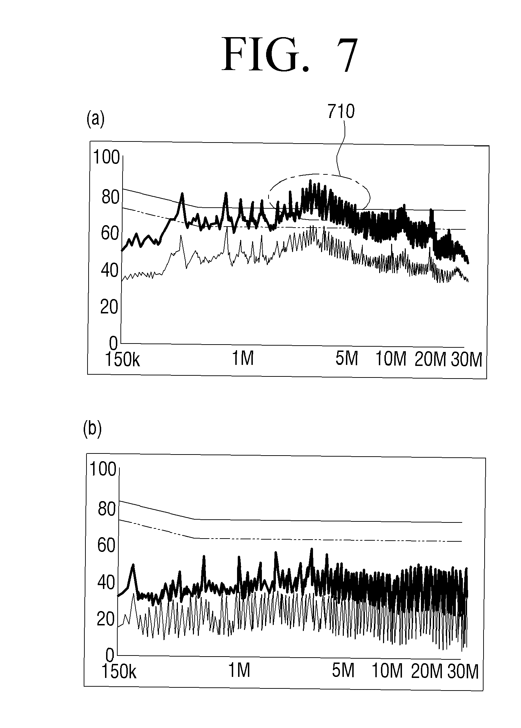

FIG 7(a) is a waveform diagram in a frequency domain of a differential signal output from a communication interface apparatus in the related art and FIG 7(b) is a waveform diagram in a frequency domain of a differential signal output from the communication interface unit according to an exemplary embodiment.

Referring to FIG 7(a), it can be seen that a frequency domain 710 exceeding the standard specification is present in the differential signal output from the communication interface apparatus in the related art. However, referring to FIG 7(b), a frequency domain exceeding the standard specification is not present in all frequency domains of the differential signal output from the communication interface unit according to an exemplary embodiment.

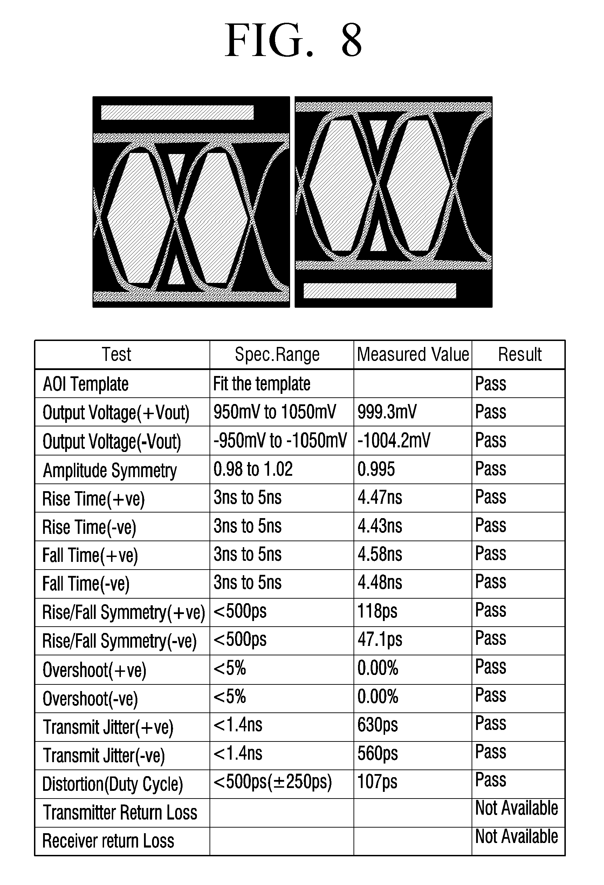

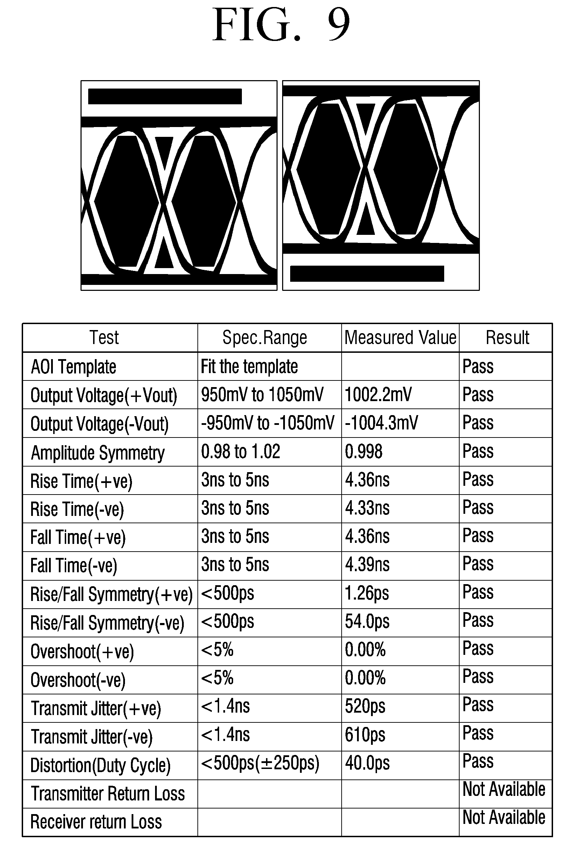

FIGS. 8 and 9 are views illustrating shapes of differential signals generated according to the exemplary embodiment. Specifically, FIG 8 is a view illustrating a shape of a differential signal output from a communication interface apparatus in the related art and FIG 9 is a view illustrating a shape of a differential signal output from a communication interface unit according to an exemplary embodiment.

Referring to FIGS. 8 and 9, it can be seen that the differential signal output according to the exemplary embodiment has the same shape as in the related art. That is, it can be seen that the differential signal is not attenuated even when the conducted noise induced by the ground noise is removed.

The foregoing exemplary embodiments and advantages are merely exemplary and are not to be construed as limiting the present application. The exemplary embodiments can be readily applied to other types of apparatuses. Also, the description of the exemplary embodiments is intended to be illustrative, and not to limit the scope of the claims, and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A communication interface apparatus which interfaces a display apparatus using a differential signal, the communication interface apparatus comprising:
a differential signal generation unit which generates a differential signal on the basis of a ground of the display apparatus;
a transformer which amplifies a difference between the generated differential signal and the ground of the display apparatus at a preset ratio on the basis of a ground of an external apparatus; and
an output unit which outputs the amplified difference signal.

2. The communication interface apparatus as claimed in claim 1, wherein the differential signal generation unit generates a first positive differential signal and a first negative differential signal on the basis of the ground of the display apparatus.

3. The communication interface apparatus as claimed in claim 2, wherein the transformer amplifies a difference between the ground of the display apparatus and the first positive differential signal at the preset ratio to generate a second positive differential signal on the basis of the ground of the external apparatus and amplifies a difference between the ground of the display apparatus and the first negative differential signal at a preset ratio to generate a second negative differential signal.

4. The communication interface apparatus as claimed in claim 3, wherein the transformer includes a primary winding and a secondary winding, a center of the primary winding is connected to the ground of the display apparatus, and a center of the secondary winding is connected to the ground of the external apparatus.

5. The communication interface apparatus as claimed in claim 4, wherein the center of the primary winding is connected to the ground of the display apparatus through a first capacitor and the center of the secondary winding is connected to the ground of the external apparatus through a second capacitor.

6. The communication interface apparatus as claimed in claim 4 or 5, wherein the primary winding receives the first positive differential signal through a first terminal of the primary winding and the first negative differential signal through a second terminal of the primary winding,
the secondary winding outputs the second positive differential signal through a first terminal of the secondary winding and the second negative differential signal through a second terminal of the secondary winding.

7. The communication interface apparatus as claimed in any one of claims 4 to 6, wherein a turn ratio of the primary winding to the second primary winding is 1:1.

8. The communication interface apparatus as claimed in any one of claims 1 to 7, wherein the transformer is a pulse transformer.

9. The communication interface apparatus as claimed in any one of claims 1 to 8, wherein the output unit is compatible with a local area network (LAN) connector.

10. A display apparatus, comprising:
a communication interface unit which transmits/receives image data to/from an external apparatus using a differential signal; and
a display unit which displays the image data,
wherein the communication interface unit comprises:
a differential signal generation unit which generates a differential signal on the basis of a ground of a display apparatus;
a transformer which amplifies a difference between the generated differential signal and the ground of the display apparatus at a preset ratio on the basis of a ground of an external apparatus; and
an output unit which outputs the amplified difference signal.

11. The display apparatus as claimed in claim 10, wherein the differential signal generation unit generates a first positive differential signal and a first negative differential signal on the basis of the ground of the display apparatus.

12. The display apparatus as claimed in claim 11, wherein the transformer amplifies a difference between the ground of the display apparatus and the first positive differential signal at a preset ratio to generate a second positive differential signal on the basis of the ground of the external apparatus and amplifies a difference between the ground of the display apparatus and the first negative differential signal at a preset ratio to generate a second negative differential signal.

13. The display apparatus as claimed in any one of claims 10 to 12, wherein the transformer includes a primary winding and a secondary winding, and
a center of the primary winding is connected to the ground of the display apparatus and a center of the secondary winding is connected to the ground of the external apparatus.
